# EUROPÄISCHE PATENTSCHRIFT

(11) **EP 2 652 934 B1**
(45) Veröffentlichungstag und Bekanntmachung des Hinweises auf die Patenterteilung: **09.03.2022**
(21) Anmeldenummer: 11824299.9
(22) Anmeldetag: 08.12.2011
(51) Int. Cl.: H04L 29/06, H04L 29/08, H04W 12/06, H04W 12/069

(54) **VERFAHREN ZUR BEDIENUNG EINES MOBILEN GERÄTES MITTELS EINES KRAFTFAHRZEUGES**
METHOD FOR OPERATING A MOBILE DEVICE BY MEANS OF A MOTOR VEHICLE
PROCÉDÉ DE COMMANDE D'UN APPAREIL MOBILE AU MOYEN D'UN VÉHICULE AUTOMOBILE

(30) Priorität: 13.12.2010 US 966802
(43) Veröffentlichungstag der Anmeldung: 23.10.2013
(73) Patentinhaber: Volkswagen Aktiengesellschaft, 38436 Wolfsburg (DE); Audi AG, 85045 Ingolstadt (DE)
(72) Erfinder: PUTZE, Markus, 85296 Rohrbach (DE)
(74) Vertreter: FDST Patentanwälte
(86) Internationale Anmeldenummer: PCT/EP2011/006181
(87) Internationale Veröffentlichungsnummer: WO 2012/079724

(56) Entgegenhaltungen:
- WO-A1-2006/063602
- WO-A2-2004/068424
- US-A1- 2010 037 057
- US-A1- 2010 064 136
- Raja Bose ET AL: "Terminal mode", Proceedings of the 2nd International Conference on Automotive User Interfaces and Interactive Vehicular Applications, AutomotiveUI '10, 1 January 2010 (2010-01-01), page 148, XP055083625, New York, New York, USA DOI: 10.1145/1969773.1969801 ISBN: 978-1-45-030437-5
- J?rg Brakensiek: "Terminal Mode Technical Architecture", , 1 January 2010 (2010-01-01), pages 1-87, XP055164187, Retrieved from the Internet: URL:http://s3.amazonaws.com/ppt-download/t erminalmodearchitecturereleasecandidatev09 -100527145834-phpapp01.pdf?response-conten t-disposition=attachment&Signature=iwEc9ox GqJnegZeQ+gcZiCRvsro=&Expires=1421923129&A WSAccessKeyId=AKIAIA7QTBOH2LDUZRTQ [retrieved on 2015-01-22]

## Beschreibung

### HINTERGRU̇ND DER ERFINDUNG

Die Erfindung betrifft ein Verfahren zur Bedienung eines nicht einem Kraftfahrzeug zugeordneten mobilen Gerätes, insbesondere eines Mobiltelefons, mittels eines Kraftfahrzeuges. Die Erfindung betrifft insbesondere ein Verfahren zur Bedienung eines nicht einem Kraftfahrzeug zugeordneten mobilen Gerätes, insbesondere eines Mobiltelefons, in einem Terminal Mode.

Die EP 0 760 188 B1, auf die in vollem Umfang Bezug genommen wird, offenbart eine Vorrichtung zur Verwendung mit einem vorbestimmten ersten Mobiltelefon einer Mehrzahl von unterschiedlichen Typen von Mobiltelefonen, wobei die Vorrichtung einen ersten von dem ersten Mobiltelefon getrennten Taschenadapter sowie eine gemeinsame, von dem Taschenadapter getrennte, Basiseinheit aufweist, wobei der Taschenadapter einen Empfangsabschnitt zur Verwendung bei einem Halten des ersten Telefons, eine elektrische Schnittstelle, eine Verbindungsanordnung zum elektrischen Verbinden des ersten Telefons mit der elektrischen Schnittstelle und ein Gerät zum Speichern von Informationen, die auf eine Identität des ersten Mobiltelefons bezogen sind, umfasst.

Die EP 0 559 187 B1, auf die in vollem Umfang Bezug genommen wird, offenbart eine Mobiltelefoneinheit mit einem tragbaren Mobiltelefon mit einem zugeordneten Verbinder und mit einer Puffereinheit zum Befestigen des tragbaren Mobiltelefons und enthaltend einen Puffereinheitsverbinder, der mit dem externen Verbindungsanschluss einer Kommunikationseinheit verbindbar ist.

Kraftfahrzeuge mit einer Telefonbedienvorrichtung zur Bedienung eines Mobiltelefons mittels einer drahtlosen Kommunikationsverbindung zwischen der Telefonbedienvorrichtung und dem Mobiltelefon sind z. B. aus der DE 10 2005 058 636 A1 und der WO 2004/038887 A1 bekannt.

Die Bedienung eines mobilen Gerätes in einem Terminal Mode offenbart z. B. die US 7 324 833 B2, auf die in vollem Umfang Bezug genommen wird, ein Audiosystem mit einem portablen elektronischen Gerät, umfassend ein Display, einen Speicher und einen

### BESTÄTIGUNGSKOPIE

Audiodateispieler, mit einem ersten Teil von Software, die auf dem portablen elektronischen Gerät gespeichert ist und eingerichtet ist, ein grafisches Schnittstellenteil auf dem Display anzuzeigen, wobei das grafische Schnittstellenteil einen Namen umfasst, der einer in dem Speicher gespeicherten Audiodatei zugeordnet ist, mit einem Befestigungsort an dem portablen elektronischen Gerät, das eine physikalische Schnittstelle umfasst, die eingerichtet ist, das portable elektronische Gerät zum Zwecke der Kommunikation mit einem anderen elektronischen Gerät mit einem zugeordneten Display zu koppeln, und mit einem anderen Softwareteil, das in dem portablen elektronischen Gerät gespeichert ist und eingerichtet ist, eine Repräsentation des grafischen Schnittstellenteils zu einem anderen elektronischen Gerät mittels der physikalischen Schnittstelle zu kommunizieren, um die Repräsentation auf dem zugeordneten Display anzuzeigen, wobei das portable elektronische Gerät eingerichtet ist, Schnittstelleninformationen zu dem anderen elektronischen Gerät zu übertragen, um es einem Benutzer zu ermöglichen, zumindest einen Teil einer Repräsentation eines GUI zu sehen, das das grafische Schnittstellenteil auf dem zugeordneten Display umfasst, wobei das GUI eine Mehrzahl von vorprogrammierten Softkeys umfasst, die mit der entsprechenden Audioinformationsquelle verbunden sind.

Die DE 100 08 973 B4 offenbart ein Verfahren zur Sicherstellung der Datenintegrität einer Software für ein Steuergerät eines Kraftfahrzeugs, in dem in einem Speicher eine das Steuergerät in seiner Wirkungsweise beeinflussende Software speicherbar ist, wobei folgende Schritte vorgesehen sind:
- Bereitstellen eines Steuergeräte-Schlüsselpaares mit einem ersten und einem zweiten Schlüssel, Bereitstellen einer bestimmten Anzahl n von Zertifikats-Schlüsselpaaren mit jeweils einem ersten und einem zweiten Schlüssel,
- Hinterlegen des ersten Schlüssels des Steuergeräte-Schlüsselpaares im oder für das Steuergerät in dem Kraftfahrzeug,
- Erstellen von der bestimmten Anzahl n entsprechenden Zertifikaten, wobei jedes Zertifikat eine Zertifikatsinformation umfasst, in der Zertifikatsinformation des letzten Zertifikates zumindest ein Schlüssel zur Überprüfung der Software und - falls mehrere Zertifikate verwendet werden - in den anderen Zertifikatsinformationen zumindest ein Schlüssel zur Überprüfung des nachfolgenden Zertifikates abgelegt sind, Signieren der Zertifikatsinformation des ersten Zertifikates mit dem zweiten Schlüssel des Steuergeräte-Schlüsselpaares und - falls mehr als 1 Zertifikat vorhanden sind - Signieren der übrigen Zertifikate mit dem jeweils zweiten Schlüssel eines Zertifikat-Schlüsselpaares, von dem der jeweils erste Schlüssel in der Zertifikatsinformation des vorhergehenden Zertifikats abgelegt ist,
- Signieren einer neu einzuspielenden Software mit dem zweiten Schlüssel eines Zertifikats-Schlüsselpaares, von dem der erste Schlüssel in der Zertifikatsinformation des letzten Zertifikats abgelegt ist,
- Einspielen aller signierten Zertifikate in das Steuergerät,
- Einspielen der signierten Software in das Steuergerät,
- Überprüfen der Signatur des ersten Zertifikates mit dem im oder für das Steuergerät hinterlegten ersten Schlüssel des Steuergeräte-Schlüsselpaares und falls mehr als 1 Zertifikat vorhanden sind
- Überprüfen der Signatur jeden weiteren Zertifikates mittels dem ·in der Zertifikatsinformation des vorhergehenden Zertifikats enthaltenen ersten Schlüssels,
- Akzeptieren der Zertifikatsinformation eines jeweiligen Zertifikates, wenn die jeweilige Überprüfung mit positivem Ergebnis verläuft,
- Überprüfen der Signatur der Software mit dem in der Zertifikatsinformation des letzten Zertifikats hinterlegten ersten Schlüssels und
- Akzeptieren der eingespielten Software, wenn auch diese Überprüfung mit positivem Ergebnis verläuft.

Der Terminal Mode wird näher beschrieben in Raja Bose et al: "Terminal mode", Proceedings of the 2nd International Conference on Automotive User Interfaces and Interactive Vehicular Applications, AutomotiveUI '10 und in Jörg Brakensiek: "Terminal Mode Technical Architecture".

In der WO 2004/068424 A2 wird ein Verfahren zum Steuern der Verwendung von proprietären Ressourcen, die einem Fahrzeug zugeordnet sind, beschrieben.

In der US 2010/037057 A1 wird ein System zur Nutzung vernetzter mobiler Geräte in einem Fahrzeug beschrieben. Dabei wird eine dynamische Übertragung einer Anwendung und von Daten an einen fahrzeuginternen Computer und eine Ausführung der Anwendung auf einem Mobilgerät und dem fahrzeuginternen Computer ermöglicht.

Es ist Aufgabe der Erfindung, die Bedienung von Kraftfahrzeugen zu verbessern bzw. zu vereinfachen. Es ist insbesondere Aufgabe der Erfindung, die Bedienung bzw. die Bedienbarkeit eines Mobiltelefons über kraftfahrzeugseitige Einrichtungen zu vereinfachen bzw. zu verbessern. Es ist insbesondere Aufgabe der Erfindung, einen verbesserten Terminal Mode in Verbindung mit Kraftfahrzeugen zu ermöglichen. Es ist insbesondere Aufgabe der Erfindung, das in der US 7 324 833 B2 offenbarte Verfahren bzw. System zu verbessern.

### ZUSAMMENFASSUNG DER ERFINDUNG

Vorgenannte Aufgabe wird gelöst durch ein Verfahren mit den Merkmalen gemäß Anspruch 1.

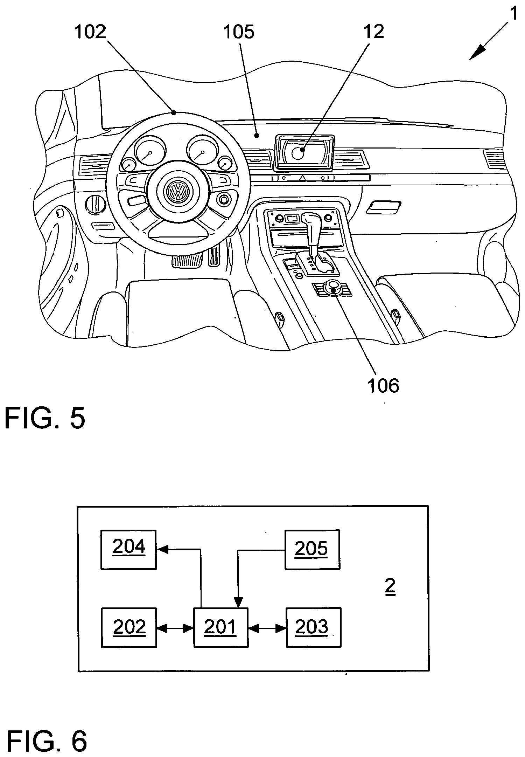

Ein Display im Sinne der Erfindung ist insbesondere ein Matrixdisplay. Ein Display im Sinne der Erfindung kann zum Beispiel ein TFT oder eine äquivalente Anzeigevorrichtung sein. Ein Display im Sinne der Erfindung ist zum Beispiel ein in ein Lenkrad integriertes Display und/oder ein neben einem Lenkrad in einer Mittelkonsole oder einem Armaturenbrett integriertes Display bzw. kann ein solches oder solche umfassen. Eine Bedienanordnung im Sinne der Erfindung kann zum Beispiel ein vor dem Display angeordnetes Touchscreen sein oder umfassen. Eine Bedienanordnung im Sinne der Erfindung kann jedoch alternativ oder zusätzlich auch ein räumlich von dem Display getrenntes Bedienelement oder eine Gruppe derartiger Bedienelemente sein oder umfassen. Ein derartiges Bedienelement kann zum Beispiel ein Drehknopf sein, wie er beispielhaft in Fig. 5 dargestellt ist. Ein Kraftfahrzeug im Sinne der Erfindung umfasst insbesondere eine Steuerung zur Darstellung veränderlicher Informationen (auf dem Display) in Abhängigkeit von mittels der Bedienanordnung erfolgender Bedienhandlungen.

Es ist insbesondere vorgesehen, dass mittels der Bedienanordnung, insbesondere in Verbindung mit dem Display, Funktionen des Kraftfahrzeugs bedienbar sind. Eine Funktion eines Kraftfahrzeuges ist im Sinne der Erfindung insbesondere die Empfangsfrequenz eines Radios, die Lautstärke einer akustischen Ausgabe in dem Kraftfahrzeug, eine Klangeinstellung (Art und Balance), eine Wahl eines Kartenausschnitts, eine Titelwahl, eine Auswahl eines Zielortes und/oder eine Temperatureinstellung. Eine Funktion eines Kraftfahrzeuges im Sinne der Erfindung ist insbesondere eine Funktion, für die ein Sollwert aus einer Auswahl von, insbesondere kontinuierlichen, Werten getroffen werden soll. Eine Funktion eines Kraftfahrzeugs im Sinne der Erfindung ist insbesondere eine analog, insbesondere einer Skala folgend, einstellbare Funktion. In vorteilhafter Ausgestaltung der Erfindung umfasst die Funktion des Kraftfahrzeuges das Scrollen durch eine Liste. In weiterhin vorteilhafter Ausgestaltung der Erfindung umfasst die Funktion des Kraftfahrzeuges das Verschieben eines Kartenausschnitts. In weiterhin vorteilhafter Ausgestaltung der Erfindung umfasst die Funktion des Kraftfahrzeuges das Skalieren eines Kartenausschnitts. In weiterhin vorteilhafter Ausgestaltung der Erfindung umfasst die Funktion des Kraftfahrzeuges das Bewegen eines auf dem Display dargestellten Elementes.

Ein nicht dem Kraftfahrzeug zugeordnetes mobiles Gerät soll im Sinne der Erfindung insbesondere ein Gerät sein, das in keinem Bezug zum Kraftfahrzeug steht. Ein nicht dem Kraftfahrzeug zugeordnetes mobiles Gerät im Sinne der Erfindung soll insbesondere ein Gerät sein, das in Verbindung mit bzw. in Verbindung mit einer Mehrzahl von Kraftfahrzeugen nutzbar ist. Ein nicht dem Kraftfahrzeug zugeordnetes mobiles Gerät soll im Sinne der Erfindung insbesondere ein mobiles Gerät sein, dessen hauptsächlicher Verwendungszweck nicht im Zusammenhang mit dem bzw. einem Kraftfahrzeug steht. Ein nicht dem Kraftfahrzeug zugeordnetes mobiles Gerät soll im Sinne der Erfindung insbesondere ein Mobiltelefon, ein PDA, ein MP3-Spieler oder ein Notebook sein oder eine Funktionalität eines solchen Gerätes umfassen. Ein nicht einem Kraftfahrzeug zugeordnetes mobiles Gerät im Sinne der Erfindung ist insbesondere ein Portable Electronic Device im Sinne der US 7 324 833 B2.

Ein Verifizieren erfolgt im Sinne der Erfindung mittels eines Private Key (Privater Schlüssel). Ein solcher Private Key (Privater Schlüssel) ist dabei in dem Kraftfahrzeug gespeichert.

Es kann zum Beispiel vorgesehen sein, dass das Senden des digitalen Zertifikats von dem mobilen Gerät zum Kraftfahrzeug dadurch ausgelöst wird, dass das auf dem mobilen Gerät lauffähige Programm auf dem mobilen Gerät gestartet wird. Ein solches Starten kann zum Beispiel durch Bedienhandlungen mittels Bedienelementen des mobilen Gerätes erfolgen.

Das auf dem mobilen Gerät lauffähige Programm verbleibt insbesondere auf dem mobilen Gerät. Das auf dem mobilen Gerät lauffähige Programm wird insbesondere nicht (als solches) an das Kraftfahrzeug übertragen.

Zuvor wird das digitale Zertifikat mittels eines Zertifizierungsservers ausgestellt. Das digitale Zertifikat wird zu dem auf dem mobilen Gerät lauffähigen Programm mittels des Zertifizierungsservers zugeordnet. Das auf dem mobilen Gerät lauffähige Programm und das dem auf dem mobilen Gerät lauffähigen Programm zugeordnete digitale Zertifikat werden mittels des Zertifizierungsservers zum mobilen Gerät gesendet bzw. das auf dem mobilen Gerät lauffähige Programm und das dem auf dem mobilen Gerät lauffähigen Programm zugeordnete digitale Zertifikat werden von dem Zertifizierungsserver zum mobilen Gerät gesendet.

In einer weiteren Ausgestaltung der Erfindung wird das auf dem mobilen Gerät lauffähige Programm zuvor an den Zertifizierungsserver gesendet.

In einer weiteren Ausgestaltung der Erfindung werden von Daten zum Darstellen der von dem auf dem mobilen Gerät lauffähigen Programm zugeordneten Informationen von dem mobilen Gerät zum Kraftfahrzeug übertragen . In einer weiteren Ausgestaltung der Erfindung wird ein mittels der Bedienanordnung des Kraftfahrzeuges erzeugter Befehl von dem Kraftfahrzeug zum mobilen Gerät übertragen. In einer weiteren Ausgestaltung der Erfindung wird das auf dem mobilen Gerät lauffähige Programm in Abhängigkeit des Befehls gesteuert. Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen.

### KURZE BESCHREIBUNG DER ZEICHNUNGEN

- Fig. 1: zeigt ein Ausführungsbeispiel eines Verfahrens zur Bedienung eines mobilen Gerätes mittels eines Kraftfahrzeuges;
- Fig. 2: zeigt ein Ausführungsbeispiel zum Übertragen von Daten von einem Zertifizierungsserver zu einem mobilen Gerät;
- Fig. 3: zeigt ein Ausführungsbeispiel eines Kraftfahrzeuges in einer Prinzipdarstellung;
- Fig. 4: zeigt ein Ausführungsbeispiel für einen Datenaustausch zwischen einem Kraftfahrzeug und einem mobilen Gerät;
- Fig. 5: zeigt das Kraftfahrzeug gemäß Fig. 3 in einer ausschnittsweisen Innenansicht; und
- Fig. 6: zeigt ein Ausführungsbeispiel eines mobilen Gerätes in einerPrinzipdarstellung.

### DETAILLIERTE BESCHREIBUNG VON BEVORZUGTEN AUSFÜHRUNGSBEISPIELEN

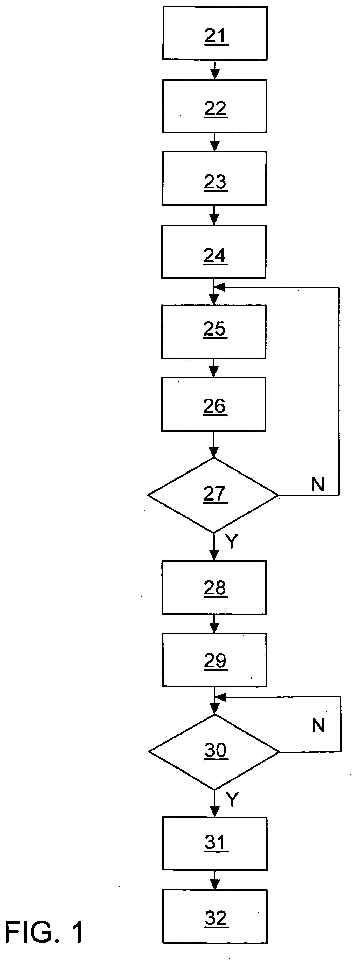

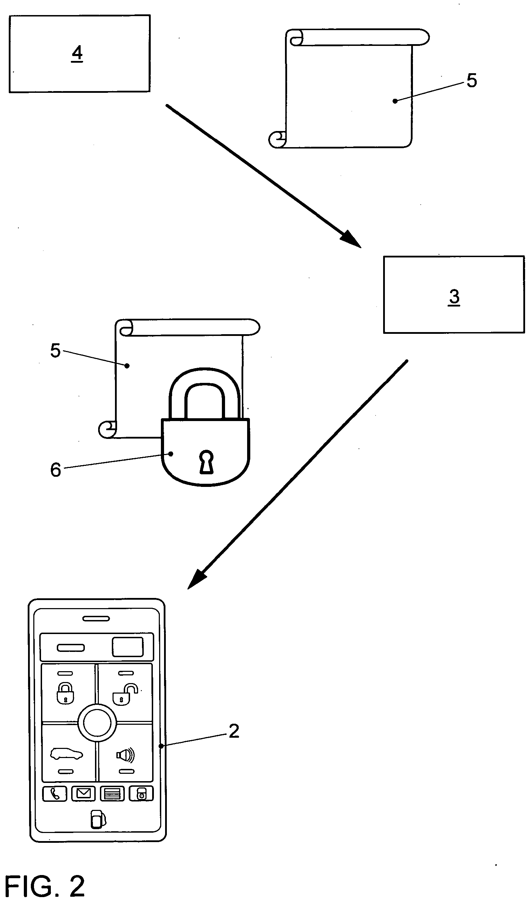

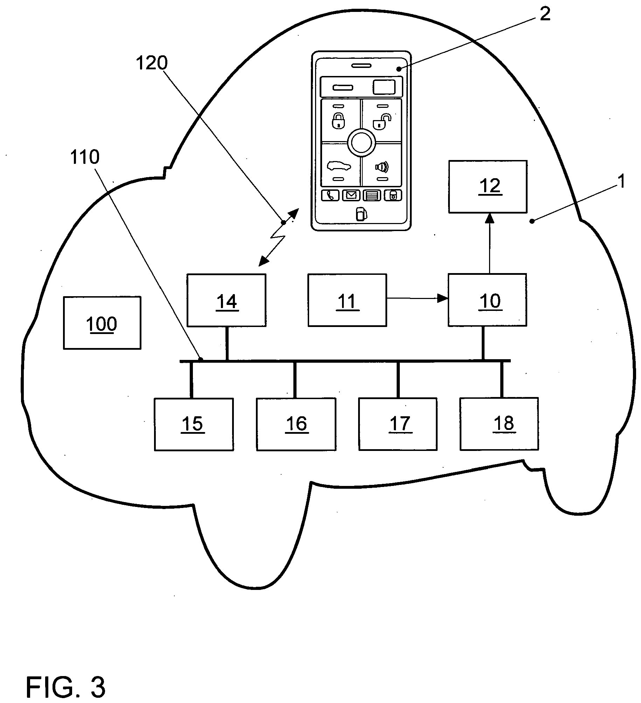

Fig. 1 zeigt ein Ausführungsbeispiel eines Verfahrens zur Bedienung eines in Fig. 2 und Fig. 3 dargestellten mobilen Gerätes 2 mittels eines Kraftfahrzeuges 1, wobei das mobile Gerät 2 ein nicht einem Kraftfahrzeug 1 zugeordnetes mobiles Gerät also ein von dem Kraftfahrzeug 1 unabhängiges mobiles Gerät ist. Das mobile Gerät 2 ist in beispielhafter Ausgestaltung als Mobiltelefon ausgestaltet bzw. umfasst Funktionen eines Mobiltelefons. Das Kraftfahrzeug 1 umfasst, wie in Fig. 3 dargestellt, ein Display 12, das mittels einer Anzeige- und

Bediensteuerung 10 angesteuert wird, sowie eine Bedienanordnung 11, die dem Display 12 zugeordnet ist, und mittels der über die Anzeige- und Bediensteuerung 10 das Display 12 bzw. die darauf dargestellten Informationen beeinflussbar ist bzw. sind. Die Bedienanordnung 11 kann zum Beispiel ein vor dem Display 12 angeordnetes Touchscreen sein oder umfassen. Alternativ oder zusätzlich kann die Bedienanordnung 11 auch ein räumlich von dem Display 12 angeordnetes Bedienelement sein oder umfassen, wie dies beispielhaft in Fig. 5 als Drehknopf 106 dargestellt ist. Mittels der Bedienanordnung 11 sind Funktionen des Kraftfahrzeugs 1, wie etwa eine Telefonschnittstelle 14, eine Klimaautomatik 15, ein Navigationssystem 16, ein Infotainmentsystem 17 oder weitere Funktionen 18 ansteuerbar. Dazu sind die Telefonschnittstelle 14, das Klimaautomatik 15, die Navigationssystem 16, das Infotainmentsystem 17 sowie die erweiterten Funktionen 18 datentechnisch mittels eines Bussystems 110 mit der Anzeige- und Bediensteuerung 10 verbunden.

Über die Telefonschnittstelle 14 kann das Kraftfahrzeug 1 mit dem mobilen Gerät 2 kommunizieren. Eine entsprechende Kommunikation kann zum Beispiel in einer Weise erfolgen, wie sie in der EP 760 188 B1 und/oder der EP 0 559 182 B1 dargestellt ist. In vorteilhafter Weise erfolgt die Kommunikation zwischen der Telefonschnittstelle 14 und dem mobilen Gerät 2 jedoch drahtlos, insbesondere über eine bluetoothartige Verbindung oder Bluetooth-Verbindung 120.

Das in Fig. 1 dargestellte Verfahren beginnt mit einem Schritt 21, in dem ein auf dem mobilen Gerät 2 lauffähiges Programm 5 von einem Anfrageserver 4 an einen Zertifizierungsserver 3 gesendet wird.

In einem weiteren Schritt 22 wird ein digitales Zertifikat 6 mittels eines Zertifizierungsservers 3 ausgestellt. Zudem wird das digitale Zertifikat 6 dem auf dem mobilen Gerät 2 lauffähigen Programm 5 (mittels des Zertifizierungsservers 3) zugeordnet. Ein digitales Zertifikat (auch Zertifikat oder Public-Key-Zertifikat), wie das digitale Zertifikat 6, umfasst, insbesondere strukturierte Daten, die den Eigentümer sowie weitere Eigenschaften eines öffentlichen Schlüssels bestätigen. Durch ein derartiges digitales Zertifikat können z. B. Nutzer eines asymmetrischen Kryptosystems den öffentlichen Schlüssel einer Identität (z. B. einer Person, einer Organisation oder einem IT-System) zuordnen und seinen Geltungsbereich bestimmen. Ein digitales Zertifikat im Sinne der Erfindung enthält insbesondere eine oder mehrere der folgenden Informationen:
- Den Namen (oder eine andere eindeutige Bezeichnung) des Ausstellers des Zertifikates
- Informationen zu den Regeln und Verfahren, unter denen das Zertifikat ausgegeben wurde
- Informationen zur Gültigkeitsdauer des Zertifikates
- Den öffentlichen Schlüssel, zu dem das Zertifikat Angaben macht. Den Namen (oder eine andere eindeutige Bezeichnung) des Eigentümers des öffentlichen Schlüssels
- Weitere Informationen zum Eigentümer des öffentlichen Schlüssels
- Angaben zum zulässigen Anwendungs- und Geltungsbereich des öffentlichen Schlüssels
- Eine digitale Signatur des Ausstellers über alle anderen Informationen.

In einem weiteren Schritt 23 werden das auf dem mobilen Gerät·2 lauffähige Programm 5 und das dem auf dem mobilen Gerät 2 lauffähigen Programm 5 zugeordneten digitale Zertifikat 6 - wie in Fig. 2 dargestellt - von dem Zertifizierungsserver 3 zum mobilen Gerät 2 gesendet. Zudem werden in einem weiteren Schritt 24 das auf dem mobilen Gerät 2 lauffähige Programm 5 und das dem Programm zugeordnete digitale Zertifikat 6 in dem mobilen Gerät 2 gespeichert.

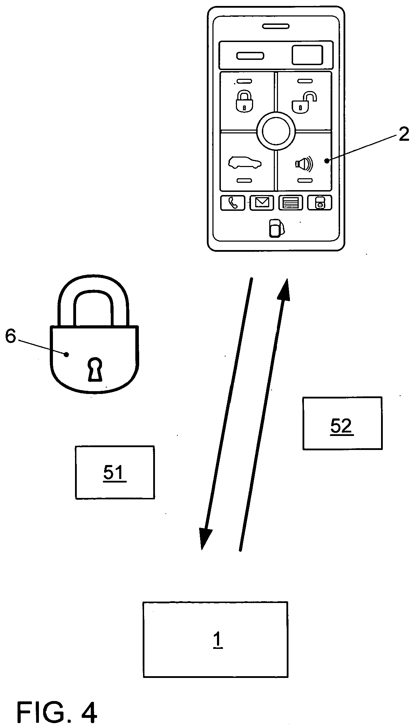

In einem weiteren Schritt 25 wird das auf dem mobilen Gerät 2 lauffähige Programm 5 auf dem mobilen Gerät 2 gestartet. Zudem wird - wie in Fig. 4 dargestellt - das digitale Zertifikat 6 mittels der Bluetooth-Verbindung 120 von dem mobilen Gerät 2 zu dem Kraftfahrzeug 1 gesendet und von diesem in einem weiteren Schritt 26 verifiziert. Das Verifizieren des digitalen Zertifikats 6 erfolgt dabei mittels eines privaten Schlüssels 100, der in dem Kraftfahrzeug 1 gespeichert ist. Es kann vorgesehen sein, dass der private Schlüssel 100 in der Telefonschnittstelle 14 oder in der Anzeige- und Bediensteuerung 10 gespeichert ist. Bei erfolgloser Verifikation des digitalen Zertifikates - vgl. Abfrage 27 - folgt wiederum Schritt 25 oder das beschriebene Verfahren wird abgebrochen.

Bei erfolgreicher Verifikation des digitalen Zertifikates - vgl. Abfrage 27 - erfolgt mittels der Bluetooth-Verbindung 120 ein Handshake zwischen dem mobilen Gerät 2 und dem Kraftfahrzeug 1 bzw. dessen Telefonschnittstelle 14. Zudem werden - wie in Fig. 4 dargestellt - in einem Schritt 28 Daten 51 zum Darstellen der von dem auf dem mobilen Gerät 2 lauffähigen Programm 5 zugeordneten Informationen mittels der Bluetooth-Verbindung 120 von dem mobilen Gerät 2 zum Kraftfahrzeug 1 übertragen. Die Daten 51 können z. B. die *interface infomation* gemäß der US 7 324 833 B2 sein oder umfassen.

In einem weiteren Schritt 29 werden die dem auf dem mobilen Gerät 2 lauffähigen Programm 5 zugeordneten Informationen mittels des Displays 12 des Kraftfahrzeuges 1 dargestellt. Wird, während die den auf den mobilen Gerät 2 lauffähigen Programm zugeordneten Informationen mittels des Displays 12 des Kraftfahrzeuges dargestellt werden, die Bedienanordnung 5 in einer Weise bedient, die den Kontext dieser Information zugeordnet ist (Abfrage 30), wird in einem weiteren Schritt 31 ein entsprechender mittels der Bedienanordnung 11 des Kraftfahrzeuges 1 erzeugter Befehl 52 mittels der Bluetooth-Verbindung 120 von dem Kraftfahrzeug 1 zum mobilen Gerät 2 übertragen. Zudem wird in einem Schritt 32 das auf dem mobilen Gerät 2 lauffähige Programm in Abhängigkeit des Befehls 52 gesteuert bzw. bedient.

Auf diese Weise kann das mobile Gerät 2 bzw. das entsprechende auf dem mobilen Gerät 2 lauffähige Programm 5 in Verbindung mit dem Display 12 des Kraftfahrzeugs 1 und der Bedienanordnung 11 bedient werden (Terminal Mode).

Das Display 12 ist insbesondere, wie in Fig. 5 dargestellt, neben dem Lenkrad 102 des Kraftfahrzeuges 1 an dessen Armaturenbrett 105 angeordnet.

Fig. 6 zeigt eine schematische Darstellung des mobilen Geräts 2, das zum Aufbau und zur Aufrechterhaltung der Bluetooth-Verbindung 120 zwischen der Telefonsteuerung 14 und dem mobilen Gerät 2 eine Bluetooth-Schnittstelle 202 aufweist. Bezugszeichen 201 bezeichnet eine Steuerung des mobilen Geräts 2, Bezugszeichen 204 bezeichnet ein Display des mobilen Geräts 2, Bezugszeichen 203 bezeichnet eine Mobiltelefonschnittstelle und Bezugszeichen 205 bezeichnet Bedienelemente des mobilen Geräts 2. Die Bedienelemente 205 des mobilen Geräts 2 sind insbesondere als Touchscreen über dem Display 204 ausgestaltet. Das auf dem mobilen Gerät 2 lauffähige Programm 5 kann mittels der Bedienelemente 205 des mobilen Gerätes 2, die insbesondere als Touchscreen ausgestaltet sind, bedient werden. Gleichzeitig oder alternativ ist gemäß dem beschriebenen Verfahren eine Bedienung mittels der Bedienvorrichtung 11 des Kraftfahrzeuges 1 möglich.

Das beschriebene Verfahren ist besonders geeignet für einen Terminal Mode für ein mobiles Gerät, das insbesondere ausschließlich, mittels eines in das mobile Gerät integrierten Touchscreens bedienbar ist (also keine weiteren Bedienelemente aufweist, mittels denen das entsprechende auf dem mobilen Gerät lauffähige Programm bedienbar ist), jedoch im Terminal Mode mittels einer Bedienvorrichtung des Kraftfahrzeuges bedient werden soll, die kein Touchscreen, insbesondere kein über dem Display 12 des Kraftfahrzeuges 1 angeordneten Touchscreen umfasst oder ist. Das beschriebene Verfahren ist dabei insbesondere geeignet, eine Funktion im Terminal Mode sicherzustellen, wenn eine Bedienung mittels Taster oder Drehknöpfen des Kraftfahrzeuges erfolgt.

## Patentansprüche

1. Verfahren zur Bedienung eines nicht einem Kraftfahrzeug (1) zugeordneten mobilen Gerätes (2) mittels eines Kraftfahrzeuges (1),
- wobei ein digitales Zertifikat (6), auch Public-Key-Zertifikat, mittels eines Zertifizierungsservers (3) ausgestellt wird,
- wobei das Zertifikat (6) einen öffentlichen Schlüssel enthält und wobei durch das Zertifikat (6) der öffentliche Schlüssel einer Identität zugeordnet werden kann und sein Geltungsbereich bestimmt werden kann,
- wobei das digitale Zertifikat (6) zu einem auf dem mobilen Gerät (2) lauffähigen Programm (5) mittels des Zertifizierungsservers (3) zugeordnet wird,
- wobei das auf dem mobilen Gerät (2) lauffähige Programm (5) und das dem auf dem mobilen Gerät (2) lauffähigen Programm (5) zugeordnete digitale Zertifikat (6) mittels des Zertifizierungsservers (3) zum mobilen Gerät (2) gesendet werden,
- wobei danach das auf dem mobilen Gerät (2) lauffähige Programm (5) und das dem Programm (5) zugeordnete digitale Zertifikat (6) in dem mobilen Gerät (2) gespeichert werden,
- wobei das digitale Zertifikat (6) von dem mobilen Gerät (2) zu dem Kraftfahrzeug (1) gesendet wird,
- wobei das digitale Zertifikat (6) in dem Kraftfahrzeug (1) mittels eines Private Key verifiziert wird, welcher in dem Kraftfahrzeug (1) gespeichert ist,
- wobei bei erfolgreicher Verifikation des digitalen Zertifikates (6) dem auf dem mobilen Gerät (2) lauffähigen Programm (5) zugeordnete Informationen mittels eines Displays (12) des Kraftfahrzeuges (1) dargestellt werden, und wobei das auf dem mobilen Gerät (2) lauffähige Programm (5) mittels einer dem Display (12) zugeordneten Bedienanordnung (11) des Kraftfahrzeuges (1) bedient wird.

2. Verfahren nach Anspruch 1, weiterhin umfassend:
Übertragen von Daten zum Darstellen der von dem auf dem mobilen Gerät (2) lauffähigen Programm (5) zugeordneten Informationen von dem mobilen Gerät (2) zum Kraftfahrzeug (1).

3. Verfahren nach Anspruch 1 oder 2, weiterhin umfassend:
Übertragen eines mittels der Bedienanordnung (11) des Kraftfahrzeuges (1) erzeugten Befehls (52) von dem Kraftfahrzeug (1) zum mobilen Gerät (2).

4. Verfahren nach Anspruch 3, weiterhin umfassend:
Steuerung des auf dem mobilen Gerät (2) lauffähigen Programms (5) in Abhängigkeit des Befehls (52).

## Claims

1. Method for operating a mobile device (2) that is not associated with a motor vehicle (1) by means of a motor vehicle (1),
- wherein a digital certificate (6), also public key certificate, is issued by means of a certification server (3),
- wherein the certificate (6) contains a public key and wherein by means of the certificate (6) the public key can be associated with an identity and its scope can be determined,
- wherein the digital certificate (6) is associated with a program (5) executable on the mobile device (2) by means of the certification server (3),
- wherein the program (5) executable on the mobile device (2) and the digital certificate (6) associated with the program (5) executable on the mobile device (2) are sent to the mobile device (2) by means of the certification server (3),
- wherein subsequently the program (5) executable on the mobile device (2) and the digital certificate (6) associated with the program (5) are stored in the mobile device (2),
- wherein the digital certificate (6) is sent from the mobile device (2) to the motor vehicle (1),
- wherein the digital certificate (6) is verified in the motor vehicle (1) by means of a private key, which is stored in the motor vehicle (1),
- wherein, upon successful verification of the digital certificate (6), information associated with the program (5) executable on the mobile device (2) is displayed by means of a display (12) of the motor vehicle (1), and wherein the program (5) executable on the mobile device (2) is operated by means of an operating arrangement (11) of the motor vehicle (1) associated with the display (12).

2. Method according to claim 1, further comprising:
transmitting data for displaying the information associated by the program (5) executable on the mobile device (2) from the mobile device (2) to the motor vehicle (1).

3. Method according to claim 1 or 2, further comprising:
transmitting a command (52) generated by means of the control arrangement (11) of the motor vehicle (1) from the motor vehicle (1) to the mobile device (2).

4. Method according to claim 3, further comprising:
controlling the program (5) executable on the mobile device (2) as a function of the command (52).

## Revendications

1. Procédé pour la commande d'un dispositif mobile (2) non associé à un véhicule automobile (1) au moyen d'un véhicule automobile (1),
- dans lequel un certificat numérique (6), également certificat à clé publique, est émis au moyen d'un serveur de certification (3),
- dans lequel le certificat (6) contient une clé publique et dans lequel, au moyen du certificat (6), la clé publique peut être associée à une identité et son domaine d'application peut être déterminé,
- dans lequel le certificat numérique (6) est associé à un programme (5) exécutable sur le dispositif mobile (2) au moyen du serveur de certification (3),
- dans lequel le programme (5) exécutable sur le dispositif mobile (2) et le certificat numérique (6) associé au programme (5) exécutable sur le dispositif mobile (2) sont envoyés au dispositif mobile (2) au moyen du serveur de certification (3),
- dans lequel le programme (5) exécutable sur le dispositif mobile (2) et le certificat numérique (6) associé au programme (5) sont ensuite stockés dans le dispositif mobile (2),
- dans lequel le certificat numérique (6) est envoyé du dispositif mobile (2) au véhicule automobile (1),
- dans lequel le certificat numérique (6) est vérifié dans le véhicule automobile (1) au moyen d'une clé privée, qui est stockée dans le véhicule automobile (1),
- dans lequel, en cas de vérification réussie du certificat numérique (6), des informations associées au programme (5) exécutable sur le dispositif mobile (2) sont présentées au moyen d'un afficheur (12) du véhicule automobile (1), et dans lequel le programme (5) exécutable sur le dispositif mobile (2) est commandé au moyen d'un dispositif de commande (11) du véhicule automobile (1) associé à l'écran (12).

2. Procédé selon la revendication 1, comprenant en outre :
transmission des données pour la présentation des informations associées par le programme (5) exécutable sur le dispositif mobile (2) du dispositif mobile (2) au véhicule automobile (1).

3. Procédé selon la revendication 1 ou 2, comprenant en outre :
transmission d'une commande (52) générée au moyen du dispositif de commande (11) du véhicule automobile (1) du véhicule automobile (1) au dispositif mobile (2).

4. Procédé selon la revendication 3, comprenant en outre :
commande du programme (5) exécutable sur le dispositif mobile (2) en fonction de la commande (52).
